(19) Europäisches Patentamt
European Patent Office
Office européen des brevets

(11) **EP 2 545 748 B1**

(12) **EUROPEAN PATENT SPECIFICATION**

(45) Date of publication and mention
of the grant of the patent:
**22.01.2014 Bulletin 2014/04**

(51) Int Cl.:
***H05B 33/08*** (2006.01)          ***H02M 1/15*** (2006.01)

(21) Application number: **11711679.8**

(22) Date of filing: **09.03.2011**

(86) International application number:
**PCT/IB2011/050983**

(87) International publication number:
**WO 2011/111005 (15.09.2011 Gazette 2011/37)**

(54) **POWER INTERFACE FOR A POWER SUPPLY CIRCUIT**

STROMSCHNITTSTELLE FÜR EINE STROMVERSORGUNGSSCHALTUNG

INTERFACE ÉLECTRIQUE POUR CIRCUIT D'ALIMENTATION ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.03.2010 EP 10156361**

(43) Date of publication of application:
**16.01.2013 Bulletin 2013/03**

(73) Proprietors:
• **Koninklijke Philips N.V.**
  **5656 AE Eindhoven (NL)**
  Designated Contracting States:
  **AL AT BE BG CH CY CZ DK EE ES FI FR GB GR HR HU IE IS IT LI LT LU LV MC MK MT NL NO PL PT RO RS SE SI SK SM TR**
• **Philips Intellectual Property & Standards GmbH**
  **20099 Hamburg (DE)**
  Designated Contracting States:
  **DE**

(72) Inventors:
• **ELFERICH, Reinhold**
  **NL-5656 AE Eindhoven (NL)**
• **LOPEZ, Toni**
  **NL-5656 AE Eindhoven (NL)**

(74) Representative: **van Eeuwijk, Alexander Henricus Waltherus**
  **Philips**
  **Intellectual Property & Standards**
  **P.O. Box 220**
  **5600 AE Eindhoven (NL)**

(56) References cited:
**WO-A1-2009/001279        DE-B3-102005 011 503
US-A1- 2007 182 338**

## Description

FIELD OF THE INVENTION

The present invention relates to power interfaces and a method therefor. Particularly it relates to a power interface and a method for providing a signal from a power supply circuit to a load.

BACKGROUND OF THE INVENTION

For a high market penetration of solid state light sources, such as Light Emitting Diode (LED) light sources, at the time being, retrofit lamps are considered quite important. For most consumer luminaires the user/customer may be able to replace only the sole light source (e.g. the incandescent light bulb) inside a luminaire with a modem LED light source at low initial cost. Not only the compatibility with the socket but also the compatibility with the existing installation/circuitry is quite important. Therefore, the light source should fit into existing sockets and should be compatible with the existing electrical installation, including dimmers. This includes interoperability with existing wall dimmers.

Usually, resonant converters for offline applications are not directly driven from rectified mains but at a stabilized bus voltage resulting from e.g. a pre-conditioner. If a dimming signal is available, inverter switching (e.g. switching frequency) is manipulated in order to accordingly modify the output current, which typically is measured.

It is known from the field of parallel resonant converters (PRC) that for both kinds of these converters (i.e. with inductive or capacitive output filter) and at a switching frequency equal to the resonance frequency (given by an input inductor and a parallel capacitor) the output current becomes independent of the output voltage, see for example "Steady-State Analysis and Design of the Parallel Resonant Converter" by Johnson et al, in IEEE Transactions on PE, 1988.

WO2008/120019 A1 describes an "LCL series-parallel resonant circuit" as an LED driver that is operated at a resonant frequency (given by input inductors $L1$, $L2$ and capacitor $C1$ according to Fig. 4 therein) and modulated by the inverter duty cycle. WO2008/120019 A1 describes an operation in which the duty cycle is manipulated to adjust the mains current so as to be virtually proportional to the mains voltage, resulting in unity power factor. Thus, it meets the EMC standards regarding mains harmonics. However, it requires a large (i.e. an electrolytic) capacitor placed parallel to the driven LED in order to filter the resulting 100Hz current ripple, which is suspected of causing visible flicker. In principle, the converter can be dimmed directly by the mains voltage.

SUMMARY OF THE INVENTION

The inventors of the present disclosure have identified a number of disadvantages of WO2008/120019 A1. Firstly, as noted above, a relatively large storage element, namely an electrolytic capacitor, is required according to WO2008/120019 A1. The larger this capacitor, the more efficient the LED load becomes in terms of its reduced parasitic resistance. Such an electrolytic capacitor is disadvantageous with regard to its large volume and its limited reliability, particularly at a high driver temperature. Secondly, the mains current shape described in WO2008/120019 A1 could result in worse dimmer compatibility at low power levels due to the reduced current during mains voltage zero crossings in normal operations. Another disadvantage of the LCL circuit described therein is the second resonant inductor, which may compromise zero voltage switching during variable duty cycle operation.

US2007/182338 A1 describes a current regulator for solid state lighting comprising a current shaper arranged to be operatively connected between a load and a AC power supply circuit and configured to form an output current signal from the received supply voltage signal, having a dimming angle, by converting the received supply voltage signal. This known regulator provides a suboptimal flicker behavior.

DE 102005011503 B3 provides for a pulsing method to set different levels of brightness of a light source and to achieve a smooth change between the brightness levels. This method relies on integrated circuits and is inconclusive about the relation with the AC mains cycle and the dimming thereof.

It is an object of the present invention to overcome these problems, and to provide a power interface which avoids visible flicker in a light source load attached to the power interface.

Generally, the above objectives are achieved by a power interface according to the attached independent claims.

According to a first aspect, the above objects are achieved by a current shaper for providing a signal from a power supply circuit to a load, wherein the current shaper is arranged to be operatively connected between the load and the power supply circuit; wherein the current shaper is configured to receive a supply voltage signal from the power supply circuit, which supply voltage signal has a dimming angle; and form an output current signal from the received supply voltage signal by converting the received supply voltage signal and introducing a blanking period in the converted signal, wherein the blanking period starts in the middle of each half-cycle of the received supply voltage signal, and wherein the length of the blanking period is proportional to the dimming angle of the supply voltage signal. The term "in the middle" should be interpreted as the blanking period starting within a predetermined distance from the middle of each half-cycle. The predetermined distance may correspond to a fixed percentage of the time duration of the half-cycle or to a fixed unit of time.

The disclosed current shaper may be suitable as a LED driver for small powers (e.g. 1W to 10W). The disclosed current shaper does not require an electrolytic capacitor. The disclosed current shaper may be dimmer-compatible (leading/trailing edge). The disclosed power current shaper may have a strongly reduced 100/120Hz flicker at full power as well as in dimmed states. The current shaper interface may be compatible with both single- and multi-junction LED configurations. The disclosed current shaper results in low losses, is simple to control, is small and has low-cost components. In conclusion, the disclosed subject matter may provide a mains-dimmable, elcap-free resonant LED driver for low-cost applications.

The dimming angle may correspond to an ending blanking period of the supply current signal. The dimming angle may thus be regarded as a phase angle of the supply current signal at which the blanking period of the supply current signal (provided by the power supply circuit) ends.

The output current signal may be configured such that visible flicker of visible light, such as a reduction of a 100 Hz component of the visible light, to be emitted by a light emitting element of the load is below a pre-determined level. The pre-determined level may correspond to, for example, less than 10% flicker. The current shaper may comprise a controller, and the blanking period may be defined by the controller.

The output current signal may comprise two blanking periods starting at 1/3 and 2/3 of the mains half cycle, and the length of the blanking periods may be proportional to the dimming angle.

The current shaper may be one from a group of a boost converter, a LCC, a flyback converter, and a buck-boost converter.

The current harmonics of the input current signal may fulfil requirements for lighting equipment according to IEC6100-3-2.

The current shaper may further comprise a transformer.

The power supply circuit may comprise a dimmer.

According to a second aspect, the above objects are achieved by a method in a current shaper for providing a current from a power supply circuit to a load, comprising: receiving a supply voltage signal from the power supply circuit, the supply voltage signal having a dimming angle; forming an output current signal from the received supply voltage signal by converting the received supply current signal and introducing a blanking period in the converted signal, wherein the blanking period starts in the middle of each half-cycle of the received supply current signal, and wherein the length of the blanking period is proportional to the dimming angle of the supply current signal; and providing the output current signal to the load.

The method may further comprise introducing a second blanking period in the converted signal, wherein the blanking periods start at 1/3 and 2/3 of the mains half cycle, and wherein the length of the blanking periods is proportional to the dimming angle.

It is noted that the invention relates to all possible combinations of features recited in the claims. Also, features and advantages of the first aspect are equally applicable to the second aspect.

BRIEF DESCRIPTION OF THE DRAWINGS

These and other aspects of the present invention will now be described in more detail, with reference to the appended drawings showing embodiment(s) of the invention.

Fig. 1 is a schematic illustration of a converter circuit according to an embodiment;
Fig. 2 is a schematic illustration of a converter circuit comprising a transformer circuit according to an embodiment;
Figs. 3 to 5 illustrate input/output behavior as a function of time of a converter circuit according to embodiments; and
Fig. 6 is a flowchart according to an embodiment.

DETAILED DESCRIPTION

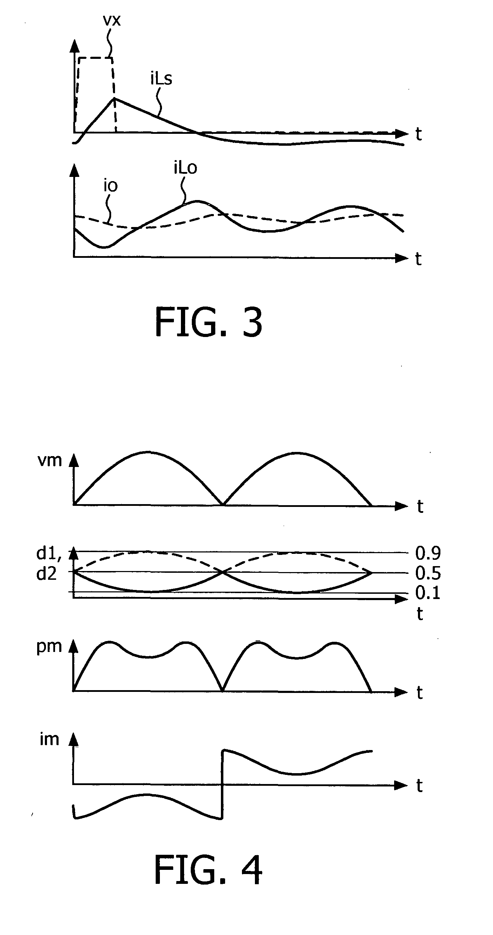

A current shaper and a method for providing a signal from a power supply circuit to a load will now be described with reference to a number of exemplary embodiments. The below embodiments are provided by way of example so that this disclosure will be thorough and complete, and will fully convey the scope of the invention to those skilled in the art. Like numbers refer to like elements throughout. In Figs. 4 to 6 the letter t denotes time.

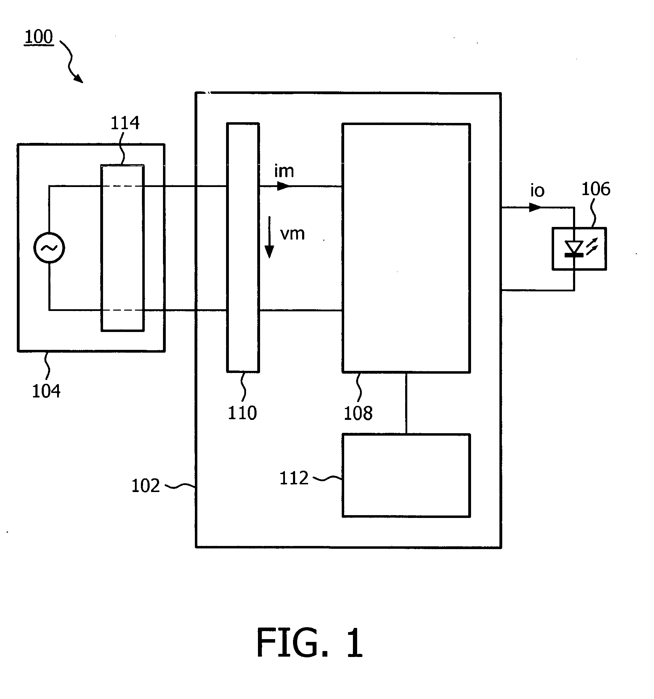

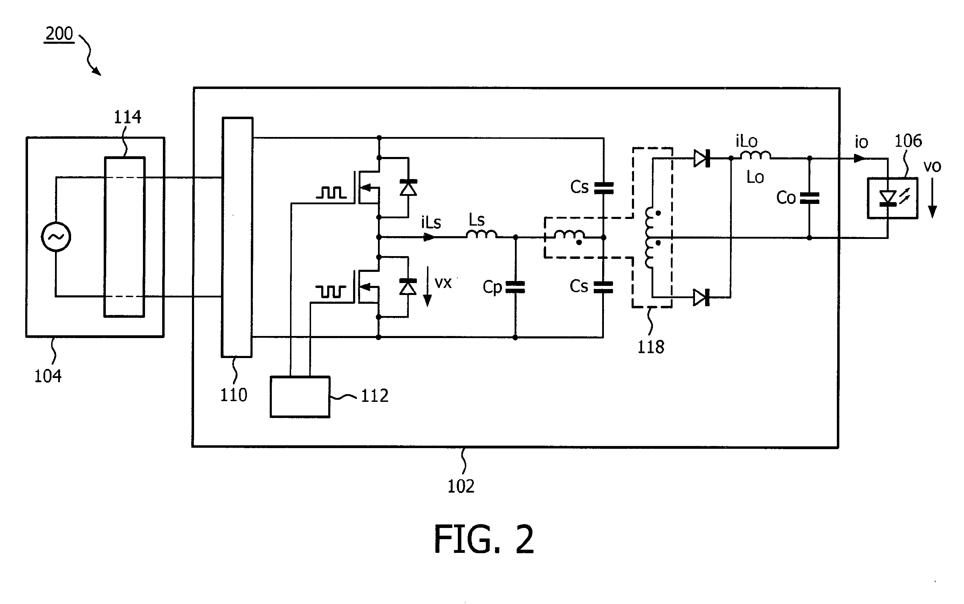

Fig. 1 shows a circuit 100. The circuit 100 comprises a current shaper 102, a power supply circuit 104 and a load 106. The power supply circuit 104 supplies a (time-variable) voltage and may comprise a dimmer 114.. The dimmer 114 may introduce a dimming angle. The current shaper 102 may comprise converter circuitry 108, rectifier circuitry 110 and controller circuitry 112. The voltage across the rectifier circuitry 110 is denoted $vm$. The input current to the converter circuitry 108 is denoted $im$. The load 106 may also comprise rectifier circuitry and converter circuitry (not shown). Advantageously the load 106 comprises one or more light emitting elements. Preferably the one or more light emitting elements are LEDs. Particularly the converter circuitry may comprise an inductive element $Ls$ and one or more capacitive elements $Cdc$, $Cp$, see Fig. 2.

The current shaper 102 may be embodied as a resonant converter. The terms current shaper and resonant converter will be used interchangeably throughout this disclosure. The current shaper 102, which is coupled between the power supply circuit 104 and the load 106, is thus arranged to be operatively connected between the load 106 and the power supply circuit 104. The current shaper thus provides a signal from a power supply circuit 104 to the load 106. The current shaper 102 receives supply power from the power supply circuit 104 and provides the load 106 with output power, wherein the output power is based on the supply power from the power supply circuit 104 and the internal components of the current shaper 102. The output power may be dependent on the settings of the dimmer 114.

The current shaper 102 may further comprise a transformer 118.

Fig. 2 shows an example of a circuit 200 according to an embodiment. The circuit 200 comprises a current shaper 102, a power supply circuit 104 and a load 106. The voltage across the load 106 is denoted vo and the current therethrough is denoted *io.* The circuit 200 may comprise a power reducing device 114. The current shaper 102 may comprise a rectifier 110 and a controller 112. The controller is arranged to provide one or more pulse trains. In order to generate the one or more pulse trains the controller may comprise timing circuitry. The one or more pulse trains may be provided to one or more transistors. The one or more transistors may then be controlled by the controller 112 such that the current received from the power supply circuit 104 is interrupted before it is fed to the converter circuitry of the current shaper. It is thus possible to insert one or more blanking periods (see below). In the case that the controller 112 is arranged to provide two pulse trains, said two pulse trains may have a phase difference of 180°. Thus, one transistor at a time may be activated in alternating time slots (wherein each transistor is provided with one of said two pulse trains). The current shaper 102 may further comprise transformer 118. The controller 112 may be arranged to provide more than two pulse trains and the current shaper may comprise more than two transistors.

Figs. 1 and 2 are provided as implementation examples that are well suited to support the proposed operation scheme. As noted above, other converters can be used as well: LCC, Boost, buck-boost, Flyback, etc.

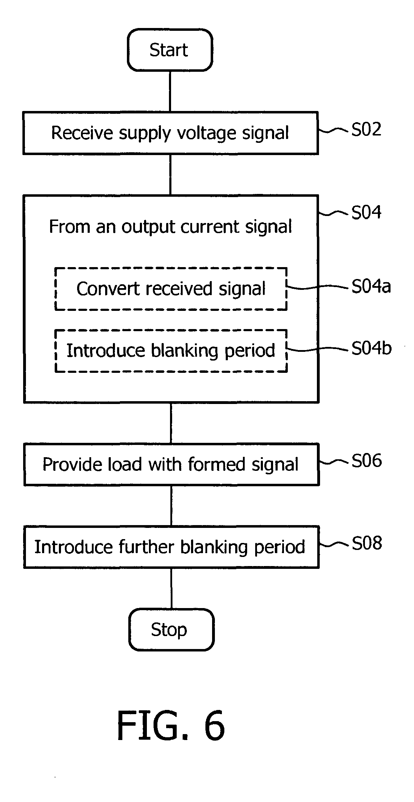

Fig. 6 is a flowchart for a method of operating the circuits 100, 200. In a step S02, the current shaper 102 is configured to receive a supply voltage signal from the power supply circuit 104 and, in a step S04, form an output current signal from the received supply voltage signal to be provided to the load 106. In other words, the current shaper is configured to form an output current signal from the received supply voltage signal. In particular, the received supply voltage signal is, in a step S04a, converted (by means of the elements of the converter circuitry 108, or by means of the converter circuitry 108 and by means of the transformer (s)). As will be further disclosed below with reference to Fig. 4a and 4b, a blanking period is introduced in the converted signal in a step S04b. The blanking period may be controlled by the controller 112. In a step S06, the formed output current signal may then be provided to the load 106.

As noted above, the current shaper 102 may comprise at least one capacitive element *Cp.* The current shaper 102 may further comprise at least one inductive element *Ls.* When it comprises a capacitive element *Cp* and an inductive element *Ls,* the resonant converter may be operated at a virtually constant frequency given by the resonance of the inductive element *Ls* and the capacitive element *Cp.* The resonant converter of Figs. 1 and 2 may thus be said to be capacitively coupled. The current running through the inductive element *Ls* is denoted *iLs.*

The (half bridge) inverter is supplied directly by rectified mains, as supplied by the power supply circuit 104, with virtually no bus filter capacitance. A further capacitive element *Cdc* could be located either in the input loop or in the output loop in order to block direct current from the power supply circuit 104.

In general, the current shaper 102 may be a boost converter. Alternatively, the current shaper 102 may be an LCC converter. Yet alternatively, the current shaper 102 may be a flyback converter or a buck-boost converter. As the skilled person understands, each of these converters has components, advantages and features which are known in the art *per se.*

The upper plot of Fig. 3 shows how the current *iLs* depends on the voltage *vx.* Similarly, the lower plot of Fig. 3 shows the relationship between *iLo* and *io.* In more detail, Fig. 3 shows a HF (high frequency) power conversion cycle with one power conversion period of the current shaper of Figs. 1 and 3 for the case of full voltage *vx* and an exemplary duty cycle of about 10%. Some variation of the switching frequency at an extreme duty cycle supports zero voltage switching and thus enables high frequency operation. In this exemplary illustration, the power conversion period is 0.9 times the resonant frequency of *Ls* and *Cp* and maximum inverter (mains) voltage.

*Full power operation*

Fig. 4 shows idealized input waveforms in non-dimmed state according to the proposed operation, i.e. for an output configuration with the transformer and the parallel resonant converter, during one mains cycle (100/120Hz).

The uppermost plot illustrates an idealized rectified mains voltage *vm* over one period (i.e. over two half cycles). In the second highest plot the line *d1* shows a preferred duty cycle modulation according to the disclosure, resulting in power *pm* and mains current *im.* The corresponding power *pm* is illustrated in the second lowest plot whilst the mains current *m* is illustrated in the lowest plot.

The duty cycle can e.g. be processed using the mains voltage and evaluating the equation

$$d1 = 0.5 * (1 - a * vm / vmpeak),$$

where a is the modulation factor and *vmpeak* is the peak mains voltage. The mains current (*im*) harmonics requirements for lighting equipment according to IEC6100-3-2 can still be achieved with a modulation factor of 0.8, which means a duty cycle variation between 10% and 50%. In other words, current harmonics of the output current signal may fulfil requirements for lighting equipment according to IEC6100-3-2.

A duty cycle modulation between 50% and 90%, as shown with the dotted line *d2* in the second highest plot, gives equivalent results. As regards a system without any substantial 100/120Hz storage means, the light output characteristic is similar to the input power *pm*. Considering further the highest converter losses at the maximum mains voltage (minimum duty cycle) and the highest LED efficiency at the lowest current, the remaining 100Hz light fluctuation may be only between 10 and 20% of the total light output.

In summary, Fig. 4 shows a current wave shape that firstly meets the mains harmonics regulations and secondly results in reduced 100Hz output power ripple (which may be at the expense of increased 200Hz ripple). In the absence of a mains filter (elcap), the flicker corresponds to output power ripple. This current wave shape can also be achieved (in the case of the converter of Figs. 1 and 2) by means of duty cycle modulation in the manner shown in Fig. 4.

*Dimmed operation*

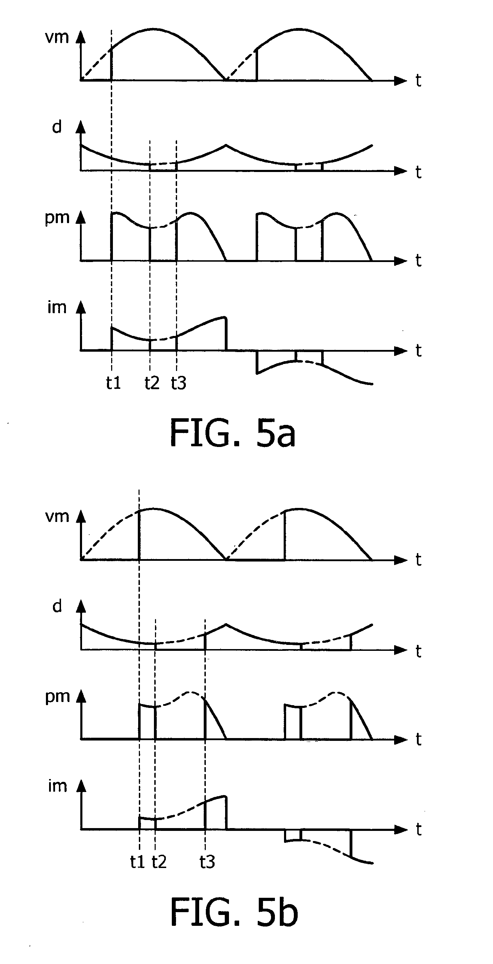

Fig. 5a and Fig. 5b show idealized waveforms for dimming according to the proposed operation, i.e. for an output configuration with the transformer and the parallel resonant converter during one mains cycle (100/120Hz). For example, Figs. 5a and 5b may represent behaviour for a duty cycle modulation scheme in dimmed modes in the case of a leading edge dimmer. The behaviour of the plots in Figs. 5a and b corresponds to different levels (states) of dimming; for the plots of Fig. 5a a less dimmed state than the dimmed state of Fig. 5b was used. Similarly to Fig. 4, the uppermost plots of Figs. 5a and 5b each illustrate an idealized rectified mains voltage *vm* over one period (i.e. over two half cycles). In the second highest plot the line *d* shows a preferred duty cycle modulation according to the disclosure, resulting in power *pm* and mains current *im*. The corresponding power *pm* is illustrated in the second lowest plot whilst the mains current *im* is illustrated in the lowest plot.

The disclosed current shaper and method firstly make use of the fact that the converter may operate in the off state already after about half the controllable angle of a mains dimmer. Secondly, the EMC standards regarding mains current harmonics need not be met here in dimmed state. The solution to avoid 100/120Hz flicker therefore is to introduce a blanking period, to virtually interrupt power conversion starting at around 90° (i.e. *t2*) at peak input voltage *vm*. Here (i.e. at around 90°), the duty cycle is already at its minimum and the dimmer does not need current to function properly. However, a relatively high current, even for low power drivers of a few watts, is drawn during the mains voltage zero crossings and thus supports dimmer compatibility.

The output current signal from the current shaper 102 has a wave shape which has a blanking period starting in about the middle of each half-cycle of the received supply current signal. The introduced blanking period lasts between *t3* and *t2* and is (according to the instant exemplary embodiment) made proportional to *t1*, which defines the dimming angle. I.e. the supply voltage signal may be said to have a dimming angle *t1*. The length of the blanking period *t1* is thus proportional to the dimming angle of the supply voltage signal. Visible flicker may thus be avoided by means of blanking periods starting at *t2* (in about the middle of the half cycle) and lasting until t3 with a period length proportional to the dimming angle *t1*. Thus, the output current signal may be configured such that visible flicker of visible light to be emitted by a light emitting element of the load is below a predetermined level.

In the case of trailing edge dimmers the duty cycle may, according to an embodiment, be modulated in an analogue manner. In this case the dimming angle t1 may be evaluated based on previous mains periods.

In both exemplary embodiments, the resulting 100/120Hz component of the light output may be reduced down to (or even below) 15% of the average light output while the 200/240Hz flicker dominates. In order to shift the minimum flicker frequency to 300/360Hz, two blanking periods could be introduced, which however may further reduce the usable dimming angle *t1*. The method may thus comprise introducing, in a step S08, a further blanking period in the converted signal. When there are two blanking periods, these may start at 1/3 and 2/3 of the mains half cycle. The length of the blanking periods may be proportional to the dimming angle.

The modulation scheme may cope with deep dimming too, since at dimming angles *t1* larger than 90° the first pulse vanishes while the second is kept at a minimum angle to still allow a residual dimmer current while converting hardly any power (e.g. below 5% of full power).

The above capacitive elements may be (non-electrolytic) capacitors.

In summary, the current wave shape is characterized by an envelope and mains synchronous blanking periods as shown in Figs. 5a and 5b, resulting in a current shaper suitable as a LED driver for small powers (e.g. 1 W to 10W) without requiring an electrolytic capacitor. It is dimmer compatible (leading/trailing edge), has a strongly reduced 100/120Hz flicker at full power as well as in dimmed states. It is compatible with both single- and multi-junction LED configurations and results in low losses, is simple to control, small and comprises low-cost components.

Measures to make some or all of these features possible are found in the disclosed operating scheme for both full power and dimmed operation. A dedicated converter design enables zero voltage switching even at an extreme duty cycle and peak mains voltage. The high switching frequency thus made possible gives small passive components and a small EMI filter or bus capacitor, which in turn support dimmer compatibility. LED forward voltage variations or tolerances do not alter the LED current.

The person skilled in the art realizes that the disclosed subject by no means is limited to the preferred embodiments described above. On the contrary, many modifications and variations are possible within the scope of the appended claims.

## Claims

1. A current shaper (102) for providing a signal from an AC power supply circuit (104) to a load (106), wherein the current shaper (102) is arranged to be operatively connected between the load (106) and the AC power supply circuit (104); wherein the current shaper (102) is configured to
   receive a supply voltage signal (vm) from the power supply circuit (104), the supply voltage signal (vm) having a dimming angle (t1); and
   form an output current signal (im) from the received supply voltage signal (vm) by converting the received supply voltage signal (vm),
   **characterized by**,
   introducing a blanking period (t2-t3) in the converted signal (im), wherein the blanking period (t2-t3) starts in the middle (t2) of each half-cycle of the received supply voltage signal (vm), and wherein the length of the blanking period (t2-t3) is proportional to the dimming angle (t1) of the supply voltage signal (vm), the output current signal (im) being configured such that visible flicker of visible light to be emitted by a light emitting element of the load (106) is below a predetermined level.

2. The current shaper (102) according to any one of the preceding claims, wherein the current shaper (102) comprises at least one of a capacitive element (Cp; Cdc) and an inductive element (Ls).

3. The current shaper (102) according to any one of the preceding claims, wherein the current shaper (102) comprises a controller (112), and wherein the blanking period is defined by the controller (112).

4. A current shaper (102) for providing a signal from an AC power supply circuit (104) to a load (106), wherein the current shaper (102) is arranged to be operatively connected between the load (106) and the AC power supply circuit (104); wherein the current shaper (102) is configured to
   receive a supply voltage signal (vm) from the power supply circuit (104), the supply voltage signal (vm) having a dimming angle (t1); and
   form an output current signal (im) from the received supply voltage signal (vm) by converting the received supply voltage signal (vm),
   **characterized by**,
   introducing two blanking period (t2-t3) in the converted signal (im), wherein the two blanking periods (t2-t3) start at 1/3 and respectively 2/3 of the mains half cycle, and wherein the length of the blanking periods (t2-t3) is proportional to the dimming angle (t1) of the supply voltage signal (vm), the output current signal (im) being configured such that visible flicker of visible light to be emitted by a light emitting element of the load (106) is below a predetermined level.

5. The current shaper (102) according to any one of the preceding claims, wherein the current shaper (102) is one from a group of a boost converter, a LCC, a flyback converter, and a buck-boost converter.

6. The current shaper (102) according to any one of the preceding claims, wherein current harmonics of the output current signal fulfil requirements for lighting equipment according to IEC6100-3-2.

7. A method in a current shaper (102) for providing a current from an AC power supply circuit (104) to a load (106), comprising:

   receiving (S02) a supply voltage signal (vm) from the AC power supply circuit (104), the supply voltage signal (vm) having a dimming angle (t1);
   forming (S04) an output current signal (im) from the received supply voltage signal (vm) by converting the received supply voltage signal (vm);
   providing (S06) the output current signal (im) to the load (106);
   **characterized by**
   during the step (S04) of forming an output current signal (im), introducing a blanking period (t2-t3) in the converted signal (im), wherein the blanking period (t2-t3) starts in the middle (t2) of each half-cycle of the received supply voltage signal (vm), and wherein the length of the blanking period (t2-t3) is proportional to the dimming angle (t1) of the supply current signal (vm), the output current signal (im) being configured such that visible flicker of visible light to be emitted by a light emitting element of the load (106) is below a predetermined level.

8. A method in a current shaper (102) for providing a current from an AC power supply circuit (104) to a load (106), comprising:

   receiving (S02) a supply voltage signal (vm) from the AC power supply circuit (104), the supply voltage signal (vm) having a dimming angle (t1);

forming (S04) an output current signal (im) from the received supply voltage signal (vm) by converting the received supply voltage signal (vm);

providing (S06) the output current signal (im) to the load (106);

**characterized by**

during the step (S04) of forming an output current signal (im), introducing two blanking period (t2-t3) in the converted signal (im), wherein the two blanking periods (t2-t3) start at 1/3 and respectively 2/3 of the mains half cycle, and wherein the length of the blanking periods (t2-t3) is proportional to the dimming angle (t1) of the supply voltage signal (vm), the output current signal (im) being configured such that visible flicker of visible light to be emitted by a light emitting element of the load (106) is below a predetermined level.


**Patentansprüche**

1. Stromformer (102), um einer Last (106) ein Signal aus einer Wechselstromversorgungsschaltung (104) zuzuführen, wobei der Stromformer (102) so ausgeführt ist, dass er zwischen der Last (106) und der Wechselstromversorgungsschaltung (104) betriebsbereit geschaltet ist, wobei der Stromformer (102) so konfiguriert ist, dass er

ein Versorgungsspannungssignal (vm) von der Wechselstromversorgungsschaltung (104) empfängt, wobei das Versorgungsspannungssignal (vm) einen Dimmungswinkel (t1) aufweist; und

ein Ausgangsstromsignal (im) aus dem empfangenen Versorgungsspannungssignal (vm) durch Umwandeln des empfangenen Versorgungsspannungssignals (vm) erzeugt,

**gekennzeichnet durch**

Einsetzen einer Austastperiode (t2-t3) in das umgewandelte Signal (im), wobei die Austastperiode (t2-t3) in der Mitte (t2) jeder Halbperiode des empfangenen Versorgungsspannungssignals (vm) beginnt, und wobei die Länge der Austastperiode (t2-t3) proportional zu dem Dimmungswinkel (t1) des Versorgungsspannungssignals (vm) ist, wobei das Ausgangsstromsignal (im) so vorgesehen ist, dass sichtbares Flimmern von sichtbarem Licht, das von einem Licht emittierenden Element der Last (106) abzustrahlen ist, unterhalb eines vorher festgelegten Pegels liegt.

2. Stromformer (102) nach Anspruch 1, wobei der Stromformer (102) zumindest ein kapazitives Element (Cp; Cdc) oder ein induktives Element (Ls) umfasst.

3. Stromformer (102) nach einem der vorangegangenen Ansprüche, wobei der Stromformer (102) eine Steuereinrichtung (112) umfasst, und wobei die Austastperiode durch die Steuereinrichtung (112) definiert wird.

4. Stromformer (102), um einer Last (106) ein Signal aus einer Wechselstromversorgungsschaltung (104) zuzuführen, wobei der Stromformer (102) so ausgeführt ist, dass er zwischen der Last (106) und der Wechselstromversorgungsschaltung (104) betriebsbereit geschaltet ist, wobei der Stromformer (102) so konfiguriert ist, dass er

ein Versorgungsspannungssignal (vm) von der Wechselstromversorgungsschaltung (104) empfängt, wobei das Versorgungsspannungssignal (vm) einen Dimmungswinkel (t1) aufweist; und

ein Ausgangsstromsignal (im) aus dem empfangenen Versorgungsspannungssignal (vm) durch Umwandeln des empfangenen Versorgungsspannungssignals (vm) erzeugt,

**gekennzeichnet durch**

Einsetzen von zwei Austastperioden (t2-t3) in das umgewandelte Signal (im), wobei die zwei Austastperioden (t2-t3) bei 1/3 beziehungsweise 2/3 der Netz-Halbperiode beginnen, und wobei die Länge der Austastperioden (t2-t3) proportional zu dem Dimmungswinkel (t1) des Versorgungsspannungssignals (vm) ist, wobei das Ausgangsstromsignal (im) so vorgesehen ist, dass sichtbares Flimmern von sichtbarem Licht, das von einem Licht emittierenden Element der Last (106) abzustrahlen ist, unterhalb eines vorher festgelegten Pegels liegt.

5. Stromformer (102) nach einem der vorangegangenen Ansprüche, wobei der Stromformer (102) aus einer Gruppe, bestehend aus einem Hochsetzsteller, einem LCC, einem Sperrwandler sowie einem Tiefsetz-Hochsetzsteller, ausgewählt wird.

6. Stromformer (102) nach einem der vorangegangenen Ansprüche, wobei Stromoberwellen des Ausgangsstromsignals Anforderungen an Beleuchtungseinrichtungen gemäß IEC6100-3-2 erfüllen.

7. Verfahren für einen Stromformer (102), um einer Last (106) einen Strom aus einer Wechselstromversorgungsschaltung (104) zuzuführen, wobei gemäß dem Verfahren:

ein Versorgungsspannungssignal (vm) von der Wechselstromversorgungsschaltung (104) empfangen wird (S02), wobei das Versorgungsspannungssignal (vm) einen Dimmungswinkel (t1) aufweist;

ein Ausgangsstromsignal (im) aus dem empfangenen Versorgungsspannungssignal (vm) durch Umwandeln des empfangenen Versorgungsspannungssignals (vm) erzeugt wird (S04),

das Ausgangsstromsignal (im) der Last (106) zugeführt wird (S06);

**dadurch gekennzeichnet, dass**

während des Schrittes (S04) des Erzeugens eines Ausgangsstromsignals (im) eine Austastperiode (t2-t3) in das umgewandelte Signal (im) eingesetzt wird, wobei die Austastperiode (t2-t3) in der Mitte (t2) jeder Halbperiode des empfangenen Versorgungsspannungssignals (vm) beginnt, und wobei die Länge der Austastperiode (t2-t3) proportional zu dem Dimmungswinkel (t1) des Versorgungsspannungssignals (vm) ist, wobei das Ausgangsstromsignal (im) so vorgesehen ist, dass sichtbares Flimmern von sichtbarem Licht, das von einem Licht emittierenden Element der Last (106) abzustrahlen ist, unterhalb eines vorher festgelegten Pegels liegt.

8. Verfahren für einen Stromformer (102), um einer Last (106) einen Strom aus einer Wechselstromversorgungsschaltung (104) zuzuführen, wobei gemäß dem Verfahren:

ein Versorgungsspannungssignal (vm) von der Wechselstromversorgungsschaltung (104) empfangen wird (S02), wobei das Versorgungsspannungssignal (vm) einen Dimmungswinkel (t1) aufweist;

ein Ausgangsstromsignal (im) aus dem empfangenen Versorgungsspannungssignal (vm) durch Umwandeln des empfangenen Versorgungsspannungssignals (vm) erzeugt wird (S04),

das Ausgangsstromsignal (im) der Last (106) zugeführt wird (S06);

**dadurch gekennzeichnet, dass**

während des Schrittes (S04) des Erzeugens eines Ausgangsstromsignals (im) zwei Austastperioden (t2-t3) in das umgewandelte Signal (im) eingesetzt werden, wobei die zwei Austastperioden (t2-t3) bei 1/3 beziehungsweise 2/3 der Netz-Halbperiode beginnen, und wobei die Länge der Austastperioden (t2-t3) proportional zu dem Dimmungswinkel (t1) des Versorgungsspannungssignals (vm) ist, wobei das Ausgangsstromsignal (im) so vorgesehen ist, dass sichtbares Flimmern von sichtbarem Licht, das von einem Licht emittierenden Element der Last (106) abzustrahlen ist, unterhalb eines vorher festgelegten Pegels liegt.

**Revendications**

1. Conformateur de courant (102) destiné à fournir un signal d'un circuit d'alimentation en courant alternatif (104) à une charge (106), dans lequel le conformateur de courant (102) est agencé de manière à être connecté fonctionnellement entre la charge (106) et le circuit d'alimentation en courant alternatif (104) ; dans lequel le conformateur de courant (102) est conçu pour

recevoir un signal de tension d'alimentation (vm) du circuit d'alimentation électrique (104), le signal de tension d'alimentation (vm) présentant un angle de variation (t1) ; et

former un signal de courant de sortie (im) à partir du signal de tension d'alimentation reçu (vm) par conversion du signal de tension d'alimentation reçu (vm),

**caractérisé par**

l'introduction d'une période de suppression (t2-t3) dans le signal converti (im), dans lequel la période de suppression (t2-t3) commence au milieu (t2) de chaque demi-cycle du signal de tension d'alimentation reçu (vm), et dans lequel la durée de la période de suppression (t2-t3) est proportionnelle à l'angle de variation (t1) du signal de tension d'alimentation (vm), le signal de courant de sortie (im) étant conçu de sorte qu'un rayon visible de lumière visible devant être émis par un élément électroluminescent de la charge (106) est inférieur à un niveau prédéterminé.

2. Conformateur de courant (102) selon l'une quelconque des revendications précédentes, dans lequel le conformateur de courant (102) comprend au moins soit un élément capacitif (Cp ; Cdc), soit un élément inductif (Ls).

3. Conformateur de courant (102) selon l'une quelconque des revendications précédentes, dans lequel le conformateur de courant (102) comprend un dispositif de commande (112), et dans lequel la période de suppression est définie par le dispositif de commande (112).

4. Conformateur de courant (102) destiné à fournir un signal d'un circuit d'alimentation en courant alternatif (104) à une charge (106), dans lequel le conformateur de courant (102) est agencé de manière à être connecté fonctionnellement entre la charge (106) et le circuit d'alimentation en courant alternatif (104) ; dans lequel le conformateur de courant (102) est conçu pour

recevoir un signal de tension d'alimentation (vm) du circuit d'alimentation électrique (104), le signal de tension d'alimentation (vm) présentant un angle de variation (t1) ; et

former un signal de courant de sortie (im) à partir du signal de tension d'alimentation reçu (vm) par conversion du signal de tension d'alimentation reçu (vm),

**caractérisé par**

l'introduction de deux périodes de suppression (t2-t3) dans le signal converti (im), dans lequel les deux périodes de suppression (t2-t3) commencent respectivement à 1/3 et à 2/3 du demi-cycle secteur, et dans lequel la durée des périodes de suppression (t2-t3) est proportionnelle à l'angle de variation (t1) du signal de tension d'alimentation (vm), le signal de courant de sortie (im) étant conçu de sorte qu'un rayon visible de lumière visible devant être émis par un élément électroluminescent de la charge (106) est inférieur à un niveau prédéterminé.

5. Conformateur de courant (102) selon l'une quelconque des revendications précédentes, dans lequel le conformateur de courant (102) est un élément d'un groupe composé d'un convertisseur élévateur, d'un convertisseur LCC, d'un convertisseur à transfert indirect et d'un convertisseur abaisseur-élévateur.

6. Conformateur de courant (102) selon l'une quelconque des revendications précédentes, dans lequel les harmoniques de courant du signal de courant de sortie respectent les exigences relatives aux équipements d'éclairage selon la norme CEI6100-3-2.

7. Procédé dans un conformateur de courant (102) destiné à fournir un courant d'un circuit d'alimentation en courant alternatif (104) à une charge (106), comprenant :

la réception (S02) d'un signal de tension d'alimentation (vm) du circuit d'alimentation en courant alternatif (104), le signal de tension d'alimentation (vm) présentant un angle de variation (t1) ;
la formation (S04) d'un signal de courant de sortie (im) à partir du signal de tension d'alimentation reçu (vm) par conversion du signal de tension d'alimentation reçu (vm),
la fourniture (S06) du signal de courant de sortie (im) à la charge (106) ;
**caractérisé par** :

pendant l'étape (S04) de formation d'un signal de courant de sortie (im), l'introduction d'une période de suppression (t2-t3) dans le signal converti (im), dans lequel la période de suppression (t2-t3) commence au milieu (t2) de chaque demi-cycle du signal de tension d'alimentation reçu (vm), et dans lequel la durée de la période de suppression (t2-t3) est proportionnelle à l'angle de variation (t1) du signal de tension d'alimentation (vm), le signal de courant de sortie (im) étant conçu de sorte qu'un rayon visible de lumière visible devant être émis par un élément électroluminescent de la charge (106) est inférieur à un niveau prédéterminé.

8. Procédé dans un conformateur de courant (102) destiné à fournir un courant d'un circuit d'alimentation en courant alternatif (104) à une charge (106), comprenant :

la réception (S02) d'un signal de tension d'alimentation (vm) du circuit d'alimentation en courant alternatif (104), le signal de tension d'alimentation (vm) présentant un angle de variation (t1) ;
la formation (S04) d'un signal de courant de sortie (im) à partir du signal de tension d'alimentation reçu (vm) par conversion du signal de tension d'alimentation reçu (vm),
la fourniture (S06) du signal de courant de sortie (im) à la charge (106) ;
**caractérisé par** :

pendant l'étape (S04) de formation d'un signal de courant de sortie (im), l'introduction de deux périodes de suppression (t2-t3) dans le signal converti (im), dans lequel les deux périodes de suppression (t2-t3) commencent respectivement à 1/3 et à 2/3 du demi-cycle secteur, et dans lequel la durée des périodes de suppression (t2-t3) est proportionnelle à l'angle de variation (t1) du signal de tension d'alimentation (vm), le signal de courant de sortie (im) étant conçu de sorte qu'un rayon visible de lumière visible devant être émis par un élément électroluminescent de la charge (106) est inférieur à un niveau prédéterminé.

FIG. 1

FIG. 2

FIG. 3

FIG. 4

FIG. 5a

FIG. 5b

FIG. 6

**EP 2 545 748 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008120019 A1
- US 2007182338 A1

- DE 102005011503 B3

**Non-patent literature cited in the description**

- **JOHNSON et al.** Steady-State Analysis and Design of the Parallel Resonant Converter. *IEEE Transactions on PE,* 1988